# EUROPEAN PATENT APPLICATION

(11) **EP 4 386 542 A1**
(43) Date of publication of application: **19.06.2024**
(21) Application number: 22306898.2
(22) Date of filing: 15.12.2022
(51) Int. Cl.: G06F 8/54, G06F 8/654, G06F 8/41

(54) **A METHOD FOR THE RELINK OF SOFTWARE COMPONENTS INSTALLED ON A DEVICE BEING UPDATED**

(71) Applicant: THALES DIS FRANCE SAS, 92190 Meudon (FR)
(72) Inventor: LEPAVEC, Emmanuel, 75008 Paris (FR); MINETTE DE SAINT MARTIN, Xavier, 78160 Marly le Roi (FR); BOUVERON, Dominique, 78340 Clayes sous bois (FR); PHAN, Guillaume Chi-Dan, 75009 Paris (FR)
(74) Representative: Scheer, Luc

(57) **Abstract**

The invention concerns a method for the relink of software components installed on a device being updated, the device comprising a CAP file, the method comprising creating a CAP file component, called Link Component (30), the Link Component (30) comprising a proprietary Constant Pool part (31), built by using the original Constant Pool component of the CAP file, and a proprietary Reference Location part (32), built by using the original Reference Location Component and the original Method Component of the CAP file.

## Description

The present invention relates to upgrading a software/firmware (hereinafter software components or software) featuring components interworking with each other and widely used concepts such as component dependencies, type hierarchy, extension, instance-based objects, etc...

The invention applies in particular to electronic devices like smartphones, M2M (Machine to Machine) equipments,... cooperating with secure elements like smart cards, Sim cards, UICCs (Universal Integrated Circuit Card), e-UICCs (embedded UICC) or ie-UICCs (integrated embedded UICC), and in particular to loT (Internet of Things) devices having small computing capabilities and electrical power.

Upgrade of software components can be required to fix bugs, add new features, improve performances or security, and upgrade full APIs or components versions. It is however required to keep the existing data and perform an upgrade to ensure the applications run on the new version of the software components.

However, in complex updates, it can be very hard to update a software while keeping dependent existing data intact.

In order to upgrade a software, two solutions are known: Dynamic linking and static linking.

For dynamic linking, shared libraries and dependencies are linked during software execution. Since linking is performed during execution, it allows updating base API without issue as long as compatibility is enforced. However, dynamic linking requires significant processing power and memory requirements, which makes this solution suited for high-resource/powerful hardware. In embedded environment where resources are scarce and processing power is limited (for example for M2M applications, loT devices), or on systems where memory access penalty is high, it is very difficult to maintain efficient and fast execution.

In such constrained environment, static linking is the usually preferred implementation method as it allows fast execution in spite of required initial linking phase.

On statically linked software components, the inter-component dependencies makes upgrade of base libraries (API, etc.) very complex and requires very careful, memory intensive custom patching. Thus, given the risks and workload, full-fledged upgrade of base APIs on constrained platforms such as embedded chips or smartcards is usually not considered as possible after the product (device) is issued on the field.

It is known from CN-103914351 entitled "Method for achieving JAVA card system patches" a method for achieving JAVA card system patches. The method comprises the steps of generation of patch applications, download of the patch applications, installation of the patch applications, deletion of service packs and the patch applications and execution of patches. The problem with this solution is that it does not address the situation where entire Java APIs should be replaced. In other words, only fine-tuned patch update is addressed by this document, not API replacement.

Another prior art is disclosed in US-11 ,099,764 entitled "Method for amending the firmware of a resource constrained device". The proposed solution relates to a method for amending the firmware of a device with limited resources.

Each call addressing one of the public functions of a functional component is dispatched using a call dispatch unit.

The problem of this solution is that it addresses only dynamic linking.

The proposed invention aims to give a solution to allow seamless components upgrade using an efficient relink process for complex software based on static linking. The software could be native code components, or a virtual machine (VM).

In this respect, the invention proposes a method for the relink of software components installed on a device being updated, the device comprising a CAP file, the method comprising creating a CAP file component, called Link Component, the Link Component comprising a proprietary Constant Pool part, built by using the original Constant Pool component of the CAP file, and a proprietary Reference Location part, built by using the original Reference Location Component and the original Method Component of the CAP file.

In one embodiment, the Link Component is being generated Off-device using knowledge of binaries that the CAP file depends on.

In another embodiment, the Link Component is generated during the loading of the CAP file on the device.

Preferably, the Link Component is compressed when it is created.

Advantageously, the OS of the device includes additional metadata providing details about updated CAP files part of the OS to improve the relink process.

In a preferred embodiment, these details include a list of the updated CAP files so that only the downloaded CAP files that depend on the modified CAP files will be relinked.

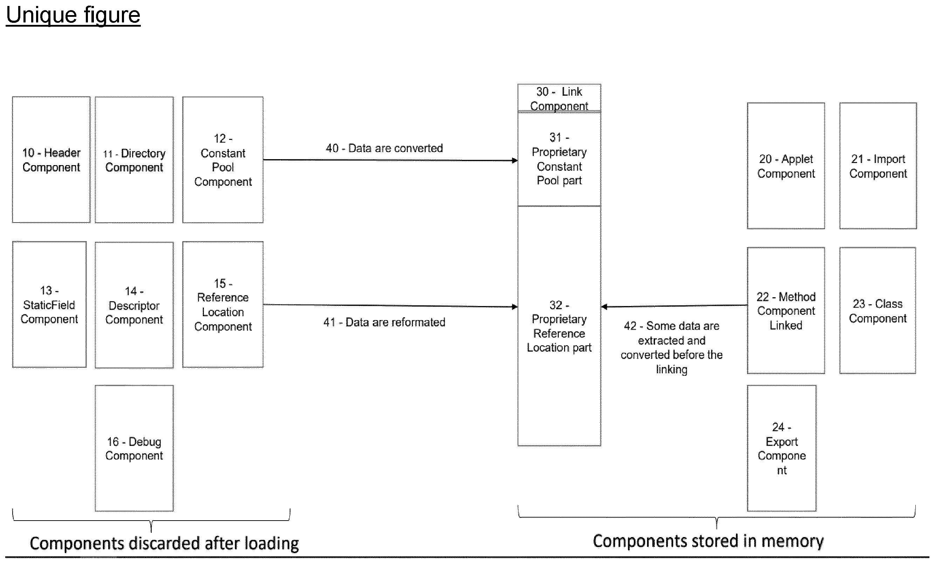

The invention will be better understood by reading the following description of the unique figure that represents the generation of a Link component according to the invention.

A typical example of using the invention applies to software installed on a Java Card product and executed by a Java Card Virtual Machine (JCVM).

A typical Java Card CAP file consists of a set of the following standard components:
COMPONENT_Header
COMPONENT_Directory
COMPONENT_Import
COMPONENT_Applet
COMPONENT_Class
COMPONENT_Method
COMPONENT_StaticField
COMPONENT_Export
COMPONENT_ConstantPool
COMPONENT_ReferenceLocation
COMPONENT_Descriptor (optional)

The Header Component contains general information about this CAP file and the package it defines.

The Directory Component lists the size of each of the components defined in this CAP file. When an optional component is not included, such as the Applet Component or Debug Component, it is represented in the Directory Component.

The Import Component lists the set of packages imported by the classes in this package. It does not include an entry for the package defined in this CAP file.

The Applet Component contains an entry for each of the applets defined in this package.

The Class Component describes each of the classes and interfaces defined in this package. It does not contain complete access information and content details for each class and interface. Instead, the information included is limited to that required to execute operations associated with a particular class or interface, without performing verification. Complete details regarding the classes and interfaces defined in this package are included in the Descriptor Component. The information included in the Class Component for each interface is sufficient to uniquely identify the interface and test whether or not a cast to that interface is valid.

The Method Component describes each of the methods declared in this package. The Method Component does not contain complete access information and descriptive details for each method. Instead, the information is optimized for size and therefore limited to that required to execute each method without performing verification.

The StaticField Component has a static modifier in his declaration and is also called class variables. They are associated with the class, rather than with any object. Every instance of the class shares a class variable, which is in one fixed location in memory.

The Constant Pool Component contains an entry for each of the classes, methods, and fields referenced by elements in the Method Component. The referencing elements in the Method Component may be instructions in the methods or exception handler catch types in the exception handler table.

Entries in the Constant Pool Component reference elements in the Class Component, Method Component and Static Field Component. The Import Component is also accessed using a package token to describe references to classes, methods and fields defined in imported packages. Entries in the Constant Pool Component do not reference other entries internal to itself.

The CONSTANT_Classref_info structure is used to represent a reference to a class or an interface. The class or interface may be defined in this package or in an imported package. The Export Component lists all static elements in this package that may be imported by classes in other packages. Instance fields and virtual methods are not represented in the Export Component.

The ReferenceLocation Component 15 is the exact offset of the objects in the Method component. Reference is a variable through which you can access the object.

The Descriptor Component 14 provides sufficient information to parse and verify all elements of the CAP file.

The Constant Pool Component contains the constants that are needed to run the code of a specific class. Basicallyit is a runtime data structure similar to the symbol table. It is a per-class or per-interface runtime representation in a Java class file.

The content of the Constant Pool consists of symbolic references generated by the compiler. These references are names of variables, methods, interfaces, and classes referenced from the code. The JCVM uses them to link the code with other classes it depends on.

The Static Field Component contains all of the information required to create and initialize an image of all of the static fields defined in this package, referred to as the static field image. Offsets to particular static fields are offsets into the static field image, not the Static Field Component.

During the linking phase, the external references in the CAP file are resolved on the device from token form into the internal representation used by the virtual machine. The Reference Location Component represents lists of offsets into the info item of the Method Component to items that contain indices into the constant pool array of the Constant Pool Component.

In the unique figure, the Header Component 10, the Directory Component 11, the Constant Pool Component 12, the StaticField Component 13, the Descriptor Component 14, the

ReferenceLocation Component 15, the Debug Component 16, the Applet Component 20, the Import Component 21, the Method Component 22, the Class Component 23 and the Export Component 24 are represented.

On the left side of the figure, components 10 to 13 and 15 are used during the linking operation but can be discarded after the linking operation. They are typically removed from the device after the linking operation in order to save memory space. Components 14 and 16 are not used during the linking operation and not needed on the device, but can be used by tools outside the device for other purposes. On the right side of the figure, components 20 to 24 are used during the linking operation and must be stored on the device after the linking operation for correct usage and execution of the CAP file by the JCVM. The linked Method Component 22 that is stored on the device after the linking operation is not the original Method Component but one modified during the link operation and suitable for execution of the CAP file by the JCVM. During the linking operation, the proprietary Link component 30 (with sub-parts Constant Pool 31 and Reference Location 32) is generated, which must also be stored on the device.

The Link Component 30 may be generated:
∘ When the CAP file is loaded to and linked by the device; or
∘ Off-device using knowledge of binaries that the CAP file depends on, leading to improved linking time on the device.

In a typical scenario, the device OS initially contains a number of CAP files (e.g. implementing built-in APIs), and then additional CAP files dependent on the CAP files initially present may be later downloaded to the device, adding complementary functionality to the device.

If the device OS is later updated, in particular if CAP files initially present in the OS are updated, it may be required to link the downloaded CAP files again since the CAP files present in the OS that they depend on may have been modified. Indeed, the internal representation used by the JCVM for each token in the CAP files present in the OS may have changed.

A naive relink implementation would consist in keeping all the components needed for the linking operation, including the original Method Component. However, this approach would have a significant impact on the memory size required to store a CAP file, and would be an issue for memory-constrained devices.

The proprietary Link Component 30 is composed of two parts:
∘ A proprietary Constant Pool part 31, built using the original Constant Pool Component 12 but preferably reorganized to reduce its size (step 40);
∘ A proprietary Reference Location part 32, built using the original Reference Location Component 15 (step 41) and data extracted and converted from the original Method Component (step 42) before it is modified into the linked Method Component 22.

The structure of the proprietary Link Component 30 is described hereafter:

| | |
|---|---|
| u1 | tag |
| u2 | size |
| u1 | proprietary constant pool part[. .] |
| u1 | proprietary reference location part[. .] |

The structure of the proprietary Constant Pool part 31 is described hereafter:

| | |
|---|---|
| u2 | count instance field ref |
| u2 | count virtual method ref |
| u2 | count super method ref |
| u2 | count external static field ref |
| u2 | count external static method ref |
| u2 | count class ref |
| u2 | count internal static method ref |
| u2 | count internal static field ref |
| 1 | /* Proprietary Instance Field Reference Info (3 bytes by entry) */ |
| | u2 class_ref |
| | u1 token |
| ... | |
| t | /* Proprietary Virtual Method Field Reference Info (3 bytes by entry) |
| | */ |
| | u2 class_ref |
| | u1 token |
| ... | |
| u | /* Proprietary Super Method Reference Info (3 bytes by entry) */ |
| | u2 class_ref |
| | u1 token |
| ... | |
| v | /* Proprietary External Static Field Reference Info (3 bytes by entry) |
| | */ |
| | u1 package_token |
| | u1 class_token |
| | u1 token |
| ... | |
| w | /* Proprietary External Static Method Reference Info (3 bytes by entry) |
| | */ |
| | u1 package_token |
| | u1 class_token |
| | u1 token |
| ... | |
| x | /* Proprietary Class Reference Info (2 bytes by entry) */ |
| | u2 class ref |
| ... | |
| y | /* Proprietary Internal Static Field Reference Info (2 bytes by entry) */ |
| | u2 offset |
| ... | |
| z | /* Proprietary Internal Static Method Reference Info (2 bytes by entry) */ |
| | u2 offset |
| ... | |

The content of the proprietary Constant Pool part 31 is equivalent to the content of the standard Constant Pool Component 12, however it is reorganized and sorted by types, hence removing the need for padding bytes (as used in the standard component), hence reducing the overall size of the proprietary component. However, the consequence of this transformation is that indexes to the standard Constant Pool Component 12 found in the original Method Component must be converted to indexes to the proprietary Constant Pool part 31. This problem is addressed in the next step when building the proprietary Reference Location part 32.

As a reminder, the standard Reference Location Component 15 is structured as the concatenation of two consecutive byte streams, called byte_index_part and byte2_index_part. Each byte stream encodes OFFSETs within the Method Component where an index within Constant Pool Component can be found. In each stream, when a byte has a value of 0xFF (255), it must be added to the value of the next byte, and so on until the byte value is different from 0xFF, to get an OFFSET within the Method Component. An example is shown below.

| u2 size of byte_index_part = ... | |
|---|---|
| 1 | 0x04 /* offset_to_byte_indice */ |
| 2 | Oxff /* offset_to_byte_indice */ |
| 3 | 0x01 /* offset_to_byte_indice */ |
| ... | |

| u2 size of byte2 index part = ... | |
|---|---|
| 1 | 0x07 /* offset_to_byte_indice */ |
| 2 | Oxff /* offset_to_byte_indice */ |
| 3 | 0x07 /* offset_to_byte_indice */ |
| ... | |

The proprietary Reference Location part 32 is built by modifying the standard Reference Location Component 15 by inserting a 1-byte value (in byte_index_part) or 2-byte value (in byte2_index_part) immediately after each OFFSET. For each OFFSET, the inserted value is an index within the proprietary Constant Pool part 31, which is converted from the index found at OFFSET within the original Method Component. The result of this transformation is shown below.

| u2 size of the byte_index_part = ... | |
|---|---|
| 1 | 0x04 /* offset_to_byte_indice */ |
| 2 | ***0x55* /* index in the proprietary Constant Pool part */** |
| 3 | Oxff /* offset_to_byte_indice */ |
| 4 | 0x01 /* offset_to_byte_indice */ |
| 5 | ***0x01* /* index in the proprietary Constant Pool part */** |
| ... | |

| u2 size of the byte2_index_part = ... | |
|---|---|
| 1 | 0x07 /* offset to byte indice */ |
| 2-3 | ***0x0056* /* index in the proprietary Constant Pool part */** |
| 4 | Oxff /* offset_to_byte_indice */ |
| 5 | 0x07 /* offset_to_byte_indice */ |
| 6-7 | ***0x0100* /* index in the proprietary Constant Pool part */** |
| ... | |

The consequence of this transformation is that the information needed from the original Method Component to perform the link operation is now available in the proprietary Constant Pool part 31 and can be used in case the CAP file needs to be relinked.

Finally, it is not needed to keep the original Method Component, the ConstantPool Component 12 and the Reference Location Component 15 to be able to relink the CAP file, as the proprietary Link Component 30 will be kept and used instead. This method significantly reduces the memory size impact of supporting a CAP file relink mechanism and memory size required to support OS update scenarios.

The Link Component 30 can further be compressed when it is created to reduce its size even more, and can be decompressed on the fly during the relink operation.

The device OS generates the Link Component 30 only if it has not been generated off-device. If the component has been generated off-device, the device OS will detect that it is included in the loaded CAP file and will know that it is not necessary to generate it.

When updating the device OS, additional information can be provided about the CAP files that were modified in the OS, so only the loaded CAP files depending on them (identified by checking the CAP file dependencies) will be relinked.

This method is suitable for binary compatible changes in software components.

If non-binary compatible changes are included in new API components, either the upgrade/loading process of current software is forbidden, or the dependent software components should be disabled. This binary compatibility check can be performed during generation of new software components or during the software update processing itself.

## Claims

1. A method for the relink of software components installed on a device being updated, said device comprising a CAP file, said method comprising creating a CAP file component, called Link Component (30), said Link Component (30) comprising a proprietary Constant Pool part (31), built by using the original Constant Pool component of said CAP file, and a proprietary Reference Location part (32), built by using the original Reference Location Component and the original Method Component of said CAP file.

2. A method according to claim 1, wherein said Link Component (30) is generated Off-device using knowledge of binaries that the CAP file depends on.

3. A method according to claim 1, wherein said Link Component (30) is generated during the loading of the CAP file on said device.

4. A method according to any of claims 1 to 3, wherein said Link Component (30) is compressed when it is created.

5. A method according to any of claims 1 to 4, wherein the OS of said device includes additional metadata providing details about updated CAP files part of the OS to improve the relink process.

6. A method according to claim 5, wherein said details include a list of the updated CAP files so that only the downloaded CAP files that depend on the modified CAP files will be relinked.
